# DEMANDE DE BREVET EUROPEEN

(11) **EP 4 761 223 A1**
(43) Date de publication de la demande: **17.06.2026**
(21) Numéro de dépôt: 25166067.6
(22) Date de dépôt: 25.03.2025
(51) Int. Cl.: H04M 1/72418, G06F 3/0481, G06F 3/0482, H04M 1/72424, H04W 76/50

(54) **PROCÉDÉ DE GÉNÉRATION DE SMS POUR ASSISTANCE URGENCE, ET INTERFACE UTILISATEUR POUR LA MISE EN OEUVRE DU MÊME**

(30) Priorité: 15.12.2024 EP 24315579
(71) Demandeur: Dupre, Jean-Luc, 06160 Antibes Juan Les Pins (FR)
(72) Inventeur: DUPRE, Jean-Luc, 06160 Antibes Juan Les Pins (FR); DIMBINIAINA, Elkana Vinet, Toamasina (MG)
(74) Mandataire: Schuffenecker, Thierry

(57) **Abrégé**

La présente invention permet d'atteindre tous ces buts en réalisant un procédé de transmission d'un SMS d'assistance urgence, comportant les étapes : - installation d'une application web - de type PWA - au sein d'un téléphone intelligent comportant les étapes :
- inscription d'un utilisateur ;
- définition par l'utilisateur d'un affichage composite comportant :
Un fichier image prédéfini en arrière-plan ; et
Un pictogramme affiché en avant plan présentant une large dimension correspondant sensiblement à une première zone d'interaction avec l'utilisateur pour la détection fonctionnelle d'un double clic.

L'application PWA est caractérisée par le fait que le pictogramme est associé à un degré de transparence réglable par l'utilisateur de manière à commander le degré de discrétion de ladite application PWA lors de son fonctionnement.

## Description

### Domaine technique de l'invention

La présente invention concerne le domaine des application web pour terminaux mobiles, et notamment un procédé de génération de SMS pour assistance urgence au sein d'une application web.

### Etat de la technique

Il existe de multiples applications dédiées à la sécurité et à l'assistance d'urgence, et prenant appui sur les dispositifs mobiles de type « smartphone » ou « téléphone intelligent ».

Par exemple le brevet US11609684 décrit une *« présentation de relation de vidéo sur la chronologie pour des événements d'alertes* » permettant de réaliser un système d'alerte d'urgence via une application web et mobile. Ce système combine des notifications de type « push » et SMS au sein d'une interface standard. Mais un tel système implique une procédure d'installation et, de surcroit, son interface utilisateur n'est pas suffisamment discrète.

D'une manière générale, la plupart des solutions connues sur le marché consistent en une application mettant en œuvre une interface utilisateur qui, bien que présentant certains avantages, pêchent par leur défaut de discrétion. Or cette discrétion dans la mise en œuvre d'un procédé d'alerte est déterminante pour un(e) utilisateur/trice qui peut être exposé(e) à une situation critique de sécurité. Il importe que, par exemple, la génération d'un SMS et/ou d'un appel vocal puisse être déclenchée de la manière la plus discrète et la plus rapide, ce que ne permettent pas les solutions connues.

Par ailleurs, l'on observe depuis quelques années un développement constant et considérable des réseaux mobiles et notamment satellitaires qui permettent d'envisager des applications en ligne avec une connexion quasi permanente, et ce même sans devoir recourir aux fastidieuses et coûteuses procédures d'installation depuis les magasins et « *stores* » officiels.

Il est donc souhaitable de pouvoir disposer d'une application pour terminal ou téléphone mobile qui soit facile à installer et qui, de surcroît offre un fonctionnement des plus discrets notamment lors d'un besoin de générer une alerte d'assistance urgence avec un comportement quasi identique à une application native.

Tel est le problème technique à résoudre par la présente invention.

### Exposé de l'invention

C'est un but de la présente invention de proposer une application web pour assistance d'urgence offrant une interface utilisateur discrète qui reste néanmoins facile à mettre en œuvre et ce notamment pour des personnes vulnérables, par exemple les femmes seules, les familles monoparentales et les personnes âgées ou handicapées et toutes les personnes victimes de discrimination, etc...

C'est un autre but de la présente invention de permettre une génération "discrète" d'un SMS et optionnellement d'un appel vocal depuis une application web, qui assure une discrétion et une efficacité dans l'envoi d'un SMS vers un tiers de confiance prédéfini par un utilisateur.

C'est un troisième but de permettre la génération d'un SMS d'assistance urgence et son envoi vers un tiers de confiance qui permette à celui-ci d'identifier au premier regard le SMS comme émanant d'un proche et présentant un caractère d'urgence particulier.

C'est un quatrième but de la présente invention de réaliser une application de sécurité susceptible d'être facilement installable sur tout système mobile nomade, et ce sans recourir aux magasins et « *stores* » traditionnels d'installation des applications.

La présente invention permet d'atteindre tous ces buts en réalisant un procédé de transmission d'un SMS d'assistance urgence, comportant les étapes :
- installation d'une application web - de type PWA - au sein d'un téléphone intelligent comportant les étapes :
   - inscription d'un utilisateur ;
   - définition par l'utilisateur d'un affichage composite comportant :
      Un fichier image prédéfini en arrière-plan ; et
      Un pictogramme affiché en avant plan présentant une large dimension correspondant sensiblement à une première zone d'interaction avec l'utilisateur pour la détection fonctionnelle d'un double clic.

L'application PWA est caractérisée par le fait que le pictogramme est associé à un degré de transparence réglable par l'utilisateur de manière à commander le degré de discrétion de ladite application PWA lors de son fonctionnement.

Dans un mode de réalisation particulier, la détection d'un double clic de l'utilisateur sur ladite première surface génère la transmission d'une commande à l'attention d'un serveur d'administration distant, lequel provoque alors la génération d'un message SMS partant en toute discrétion vers un contact d'urgence prédéfini.

De préférence, la commande transmise par l'application PWA audit serveur d'administration comporte les éléments suivants :
- L'identité de l'utilisateur (nom, prénom, etc.).sa clé unique d'identification
- La référence d'un contact spécifique (contact n°1.2.3.).
- La position GPS de l'utilisateur obtenue via les permissions du navigateur ou de l'appareil.

Dans un mode de réalisation, le procédé détecte un troisième clic sur ladite première zone d'interaction et lance automatiquement un appel vocal vers un numéro prédéfini, qui pourra être, au choix de l'utilisateur, soit un numéro d'urgence national ou un numéro de téléphone du contact n°1.

Dans un mode de réalisation particulier, la commande transmise par l'application PWA audit serveur d'administration comporte en outre des données GPS successives durant une fenêtre temporelle prédéterminée permettant au contact n°1 d'accéder au suivi des déplacements consécutifs durant ladite fenêtre temporelle.

De préférence, l'affichage composite comporte en outre :
- Une seconde zone d'interaction de surface inférieure à ladite première zone pour l'affichage d'un écran de géolocalisation montrant la localisation dudit téléphone intelligent ;
- Une troisième zone d'interaction de surface inférieure à ladite première zone pour l'affichage d'un menu déroulant permettant notamment la gestion du compte et des fonds d'écran.

Le menu déroulant comporte une commande permettant d'associer un fichier image prédéfini à un degré de transparence défini par un curseur de manière à définir la construction de l'affichage composite.

### Description des dessins

D'autres caractéristiques, but et avantages de l'invention apparaîtront à la lecture de la description et des dessins ci-après, donnés uniquement à titre d'exemples non limitatifs. Sur les dessins annexés :
La figure 1 illustre une architecture générale pour la réalisation d'un procédé de transmission d'un SMS d'assistance d'urgence selon la présente invention.
La figure 2 illustre un mode de réalisation d'un procédé d'installation de l'application PWA selon la présente invention et l'enregistrement d'un utilisateur au sein du serveur d'administration 30.
Les figures 3 à 11 illustrent des copies-d 'écran correspondant aux étapes du procédé de la figure 2.
La figure 12 illustre un mode de réalisation d'un procédé 4 illustre la gestion du compte nouvellement créée par un utilisateur.
Les figures 13 à 18 illustrent des copies-d 'écran correspondant aux étapes du procédé de la figure 12.
La figure 19 illustre un procédé de gestion des fonds d'écran ainsi que le procédé de génération d'un SMS suivant la présente invention.
Les figures 20 à 25 illustrent des copies-d 'écran correspondant aux étapes du procédé de la figure 19.

### Description des modes de réalisation

Il est décrit ci-après la réalisation d'une solution de sécurité d'assistance urgence qui est facile à installer et permet un fonctionnement à la fois simple, efficace et discret.

A cet effet, l'invention se base sur une application « web » progressive, connue dans la littérature anglo-saxonne sous l'appellation « *Progressive Web Application ou PWA* » qui est une application web optimisée pour l'utilisation sur un mobile d'une application offrant des fonctionnalités d'habitude dédiées à des applications natives. Ces applications PWA présentent un grand intérêt depuis l'essor de l'Internet mobile et surtout des perspectives de développement des réseaux satellitaires qui permettront une application en ligne ayant une connexion quasi permanente. En outre, ces applications PWA présentent une grande facilité d'installation sans recourir aux *« stores* » habituels ou magasins d'installation tel que PLAY STORE, ce qui permet d'envisager un large déploiement dans le public.

La difficulté dans la conception d'une application PWA d'assistance urgence réside notamment dans le fait qu'une telle application PWA est dénuée par principe d'une fonctionnalité « message » - qui reste l'apanage de l'application « message » déjà présente dans le téléphone intelligent. De ce fait, le fonctionnement ne saurait permettre un envoi « discret » d'un SMS puisqu'un utilisateur qui souhaiterait transmettre un SMS d'assistance serait alors contraint de basculer depuis l'application PWA vers l'application « message » présente nativement au sein du téléphone, et ce au moyen d'une prise de contrôle manuelle du téléphone qui ne présenterait aucune discrétion en soi.

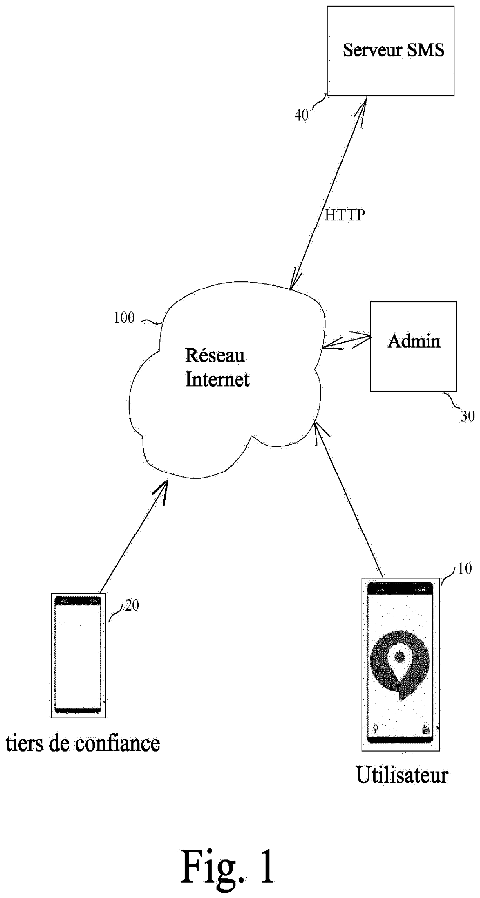

L'on va décrire comment l'on peut avantageusement solutionner ce problème en réalisant un procédé mis en œuvre au sein d'une architecture telle qu'illustrée dans la figure 1. La solution qui est décrite ci-après est implémentable dans tout type de système, de type IOS ou ANDROID et présente donc une grande généralité.

La figure 1 illustre un premier téléphone mobile 10 dans lequel l'utilisateur vient d'installer une application PWA que l'on décrira plus loin, et qui communique avec un réseau internet 100 au moyen de moyens de communications conventionnels, par exemple 3G, 4G, 5G voire même satellitaires via le réseau STARLINK^{™} (marque déposée).

Un second téléphone mobile 20 appartient à un tiers de confiance désigné par l'utilisateur et consiste en tout téléphone mobile quelconque, dotée a minima des fonctionnalités de base d'un téléphone. On notera que le téléphone 20 pourra ne pas contenir l'application PWA qui est décrite plus loin et qui est installée, elle, dans le téléphone 10.

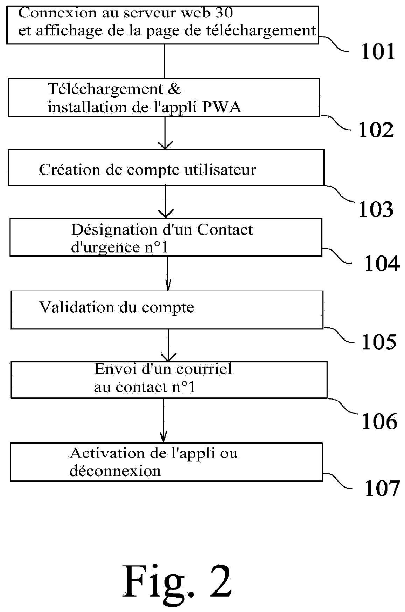

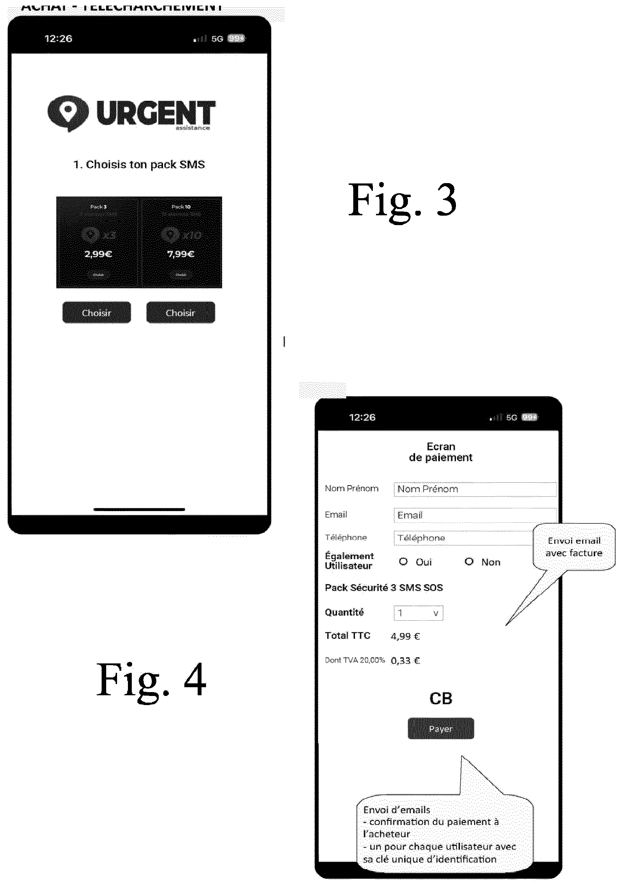

Un serveur administrateur 30 est mis en place par l'opérateur du service d'assistance urgence pour permettre les procédures d'installation de l'application PWA via un site web dédié communiquant par le protocole http notamment, mais également pour gérer les différents échanges avec l'application PWA tournant dans le téléphone 10 et également avec un serveur tiers 40, utilisé pour la génération et l'envoi de SMS partout dans le monde. Alternativement, un homme du métier pourra choisir d'incorporer les fonctionnalités du serveur 40 au sein du serveur d'administration 30 de sorte de n'avoir recours qu'à un unique serveur d'administration pour le fonctionnement complet du système.
L'on décrit à présent en relation avec la Fig. 2 - mais également avec les captures d'écran des figures 3 à 10, le procédé d'installation de l'application PWA et l'enregistrement d'un utilisateur au sein du serveur d'administration 30.

Dans une première étape 101, l'utilisateur se connecte au site web de l'opérateur du serveur d'administration 30, lui proposant par exemple, comme cela est illustré dans la figure 3, une installation de l'application PWA associées à un achat d'un ou plusieurs packs de SMS. Dans un mode de réalisation préféré, cette étape est associée à une phase de paiement illustrée dans la figure 4, suivie de la réception d'un code d'activation ou clé unique d'identification reçue par SMS, et ce suivant des procédures bien connues d'un homme du métier que, pour des raisons de concision, l'on ne décrira pas plus en détail.

On notera simplement, comme cela est illustré dans la figure 4, que l'utilisateur aura, préalablement à son paiement, saisi ses références personnelles, à savoir son nom, prénom, adresse courriel ainsi que son numéro de téléphone et un pré-paramétrage venant préciser s'il sera réellement un utilisateur du service ou, au contraire, s'il entend faire bénéficier son achat à des tiers qui seront un ou plusieurs autres utilisateurs qui recevront alors chacun leur propre code d'activation pour leur installation personnelle.

Dans une seconde étape 102, le procédé poursuit se poursuit au sein du navigateur du téléphone 10 avec un téléchargement depuis le serveur d'administration 30 d'une application PWA d'assistance urgence qui présente les fonctionnalités que l'on décrira plus loin.

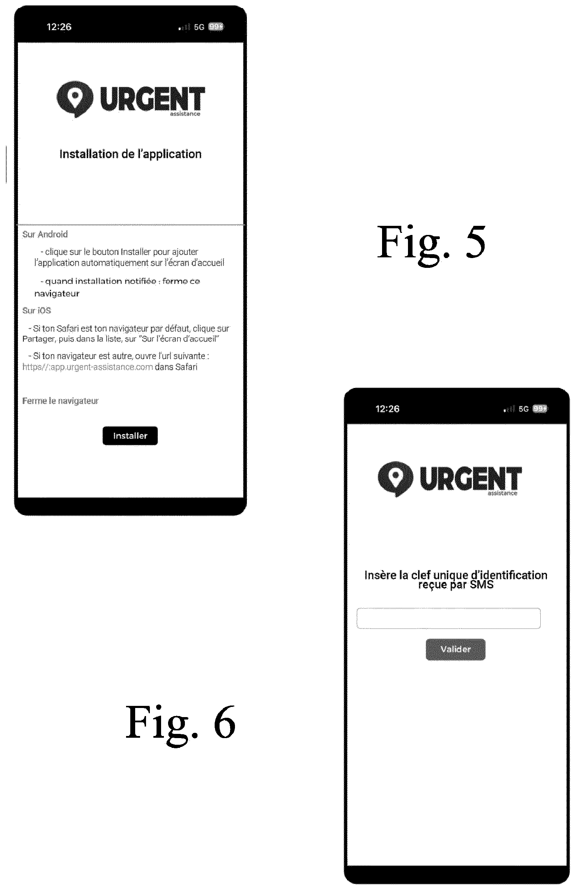

Cette étape 102 est illustrée par les copies d'écran illustrées en figures 5 et 6. Plus particulièrement la figure 5 illustre l'écran de déclenchement de la procédure d'installation avec des indications optionnelles de clarification pour l'utilisateur en fonction de la nature de son téléphone 10.

Par exemple, dans le cas d'un téléphone 10 de type Android, l'utilisateur est invité à cliquer sur le bouton INSTALLER pour ajouter l'application automatiquement sur l'écran d'accueil et est ensuite invité à fermer le navigateur quand l'installation est notifiée. Au contraire, dans le cas d'un téléphone de type iOS, l'utilisateur est invité, dans le cas d'un navigateur de type Safari, à cliquer sur Partager, puis dans la liste, sur "Sur l'écran d'accueil". Dans le cas d'un autre navigateur, l'utilisateur est invité à cliquer sur une url spécifique, par exemple https// : app.urgent-assistance.com.

Bien évidemment ces indications restent optionnelles et ne sont nullement nécessaires pour la mise en œuvre de l'invention.

La figure 6 illustre la copie d'écran affichée lors de l'insertion de la clé unique d'identification qu'aura préalablement reçue l'utilisateur/trice suite à son achat, et qui permettra de finaliser la validation de l'installation de l'application PWA.

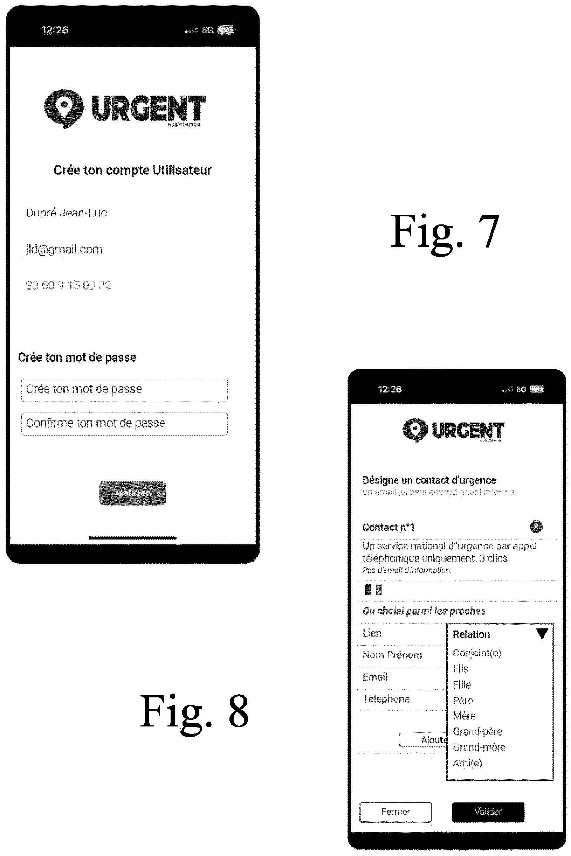

Dans une troisième étape 103, l'utilisateur est invité à compléter la création/paramétrage de son compte utilisateur, comme cela est illustré dans la figure 7, où l'utilisateur est invité à créer un mot de passe qui lui permettra de se connecter à son compte sur le site d'administration 30. Alternativement, on pourra envisager une Identification biométrique par Touch ID et Face ID.

Puis, dans une étape 104, le procédé se poursuit avec la désignation, au sein de l'application PWA d'un premier contact d'urgence au moins comme cela est illustré dans la figure 8. A cet effet, l'utilisateur pourra, de manière circonstancié en fonction du pays de localisation du mobile, définir un contact d'urgence n°1 (Nom, Prénom, Email, Téléphone,) et éventuellement son degré de relation (père, mère, ami ...) pour l'envoi d'un message SMS, lequel pourra être avantageusement généré et transmis selon la procédure automatisée que l'on décrit ci-après et qui, de surcroît, pourra être encore suivi d'un appel vocal.
Il est à noter que le paramétrage décrit et illustré dans la figure 8 permet de privilégier un numéro d'urgence de type 112 pour l'appel vocal, tout en combinaison ce dernier avec l'envoi d'un SMS au contact d'urgence n°1 défini dans la figure 8.

Puis dans une étape 105, le procédé procède à la validation du compte et du paramétrage effectué par l'utilisateur et, dans une étape 106, le serveur d'administration procède à l'envoi d'un courriel à l'attention du contact d'urgence n°1 de manière à aviser ce dernier de sa désignation par l'utilisateur.

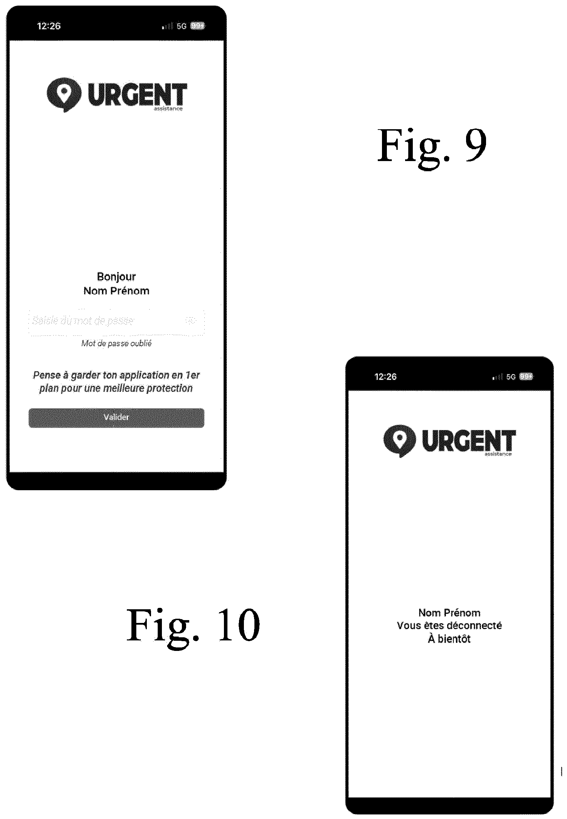

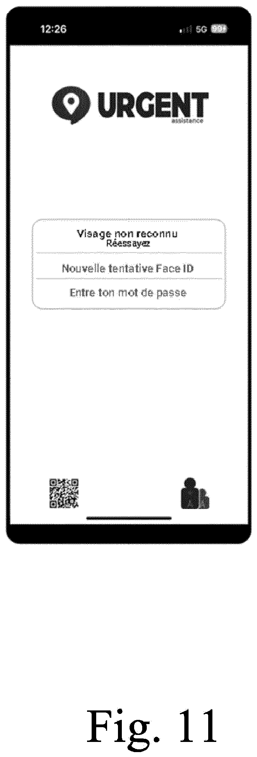

Puis dans une étape 107, le procédé procède au lancement de l'application PWA selon l'invention, sur commande de l'utilisateur qui clique sur l'icône représentative de cette dernière et saisit son mot de passe, comme illustré dans la figure 9, et ce jusqu'à sa possible déconnexion (Figure 10) et/ou reconnexion (Figure 11).

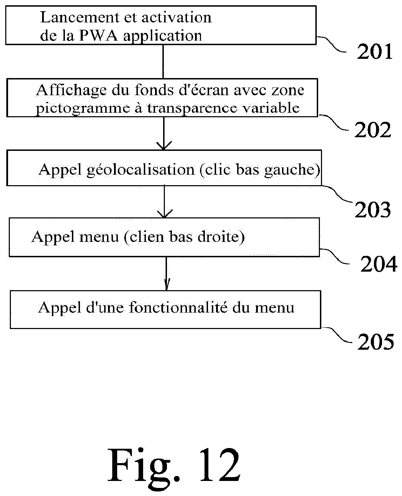

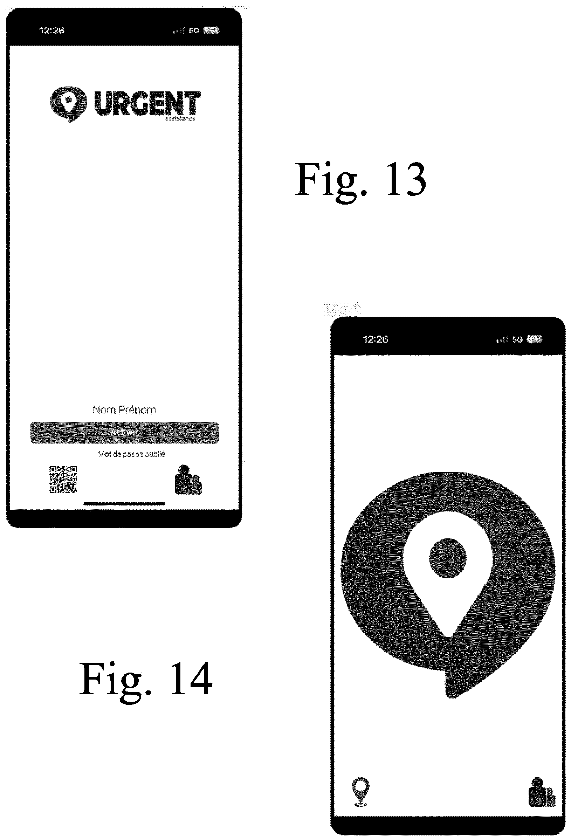

L'on décrit à présent en relation avec la figure 12 et les copies d'écran illustrées dans les figures 13 à 18, la gestion du compte nouvellement créé.

Dans une étape 201, le procédé lance et active l'application PWA comme cela est illustré dans la figure 13.

Puis, dans une étape 202, le procédé provoque l'affichage d'un écran composite comportant la superposition d'un arrière-plan et d'un avant plan.

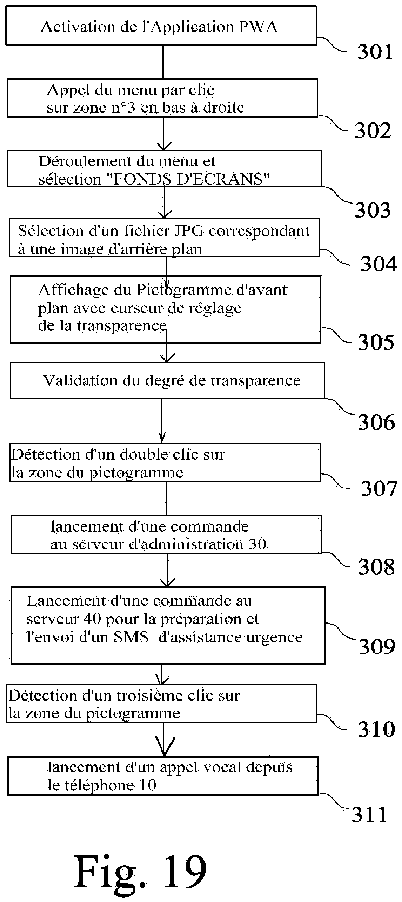

En arrière-plan, l'écran composite se compose d'un fond d'écran prédéfini, que l'on vient associer, en avant plan, à un pictogramme distinctif présentant néanmoins une transparence variable commandable et paramétrable par l'utilisateur comme on le verra en relation avec le procédé décrit en relation avec la figure 19.

La combinaison de l'arrière-plan et de l'avant plan réalisé par l'application PWA est particulièrement avantageuse car c'est elle qui permet la commande et le réglage par l'utilisateur/tricedu degré de discrétion souhaité.

Par ailleurs, cet écran composite particulièrement avantageux - car discret - ne comporte que trois zones d'interaction de manière à faciliter la commande pour tout public, notamment le public le plus fragile.

En effet, l'affichage composite selon l'invention comporte trois zones d'interaction et ou de commande, comme on le voit dans la figure 14.

L'affichage comporte d'abord une première zone d'interaction présentant une large zone sur l'écran représentée par la dimension d'un pictogramme bien visible en figure 14, mais qui pourra être avantageusement mis en transparence comme cela sera décrit plus loin. Cette première zone d'interaction offre à l'utilisateur une large possibilité de réaliser sans difficulté un double-clic sur le téléphone, même sans y prêter le moindre regard, et qui pourra, suivant le traitement qui sera décrit plus loin, déclencher la transmission d'un SMS.

L'affiche comporte par ailleurs une seconde et une troisième zone d'interaction, respectivement disposées en bas à gauche et en bas à droite de l'écran, que l'on voit dans la figure 14 mais qui, en générale, seront masquées à des fins de discrétion.

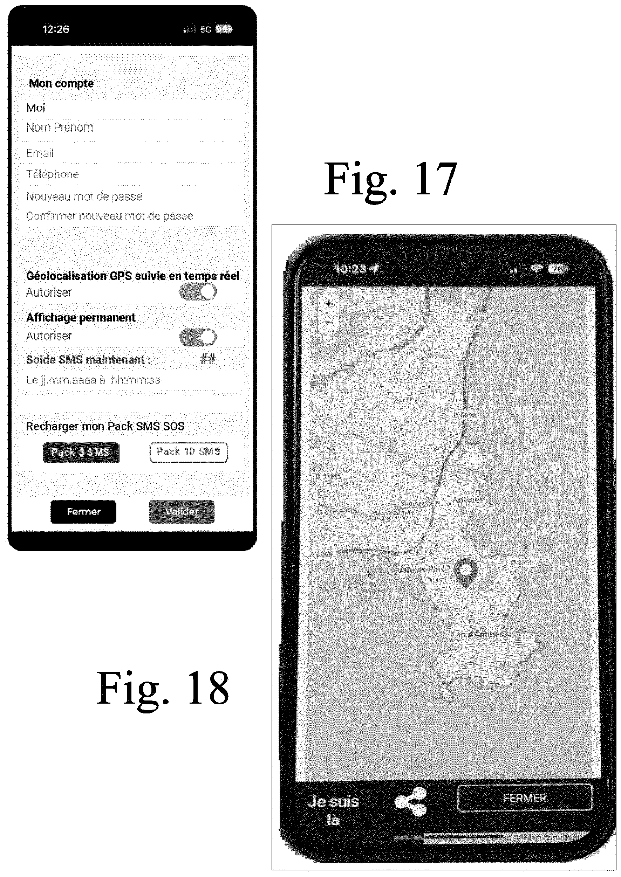

La seconde zone d'interaction se situe en bas à gauche de l'écran et permet le lancement dans une étape 203, d'un affichage de la géolocalisation du téléphone comme cela est illustré dans la figure 18 (« Je suis là »).

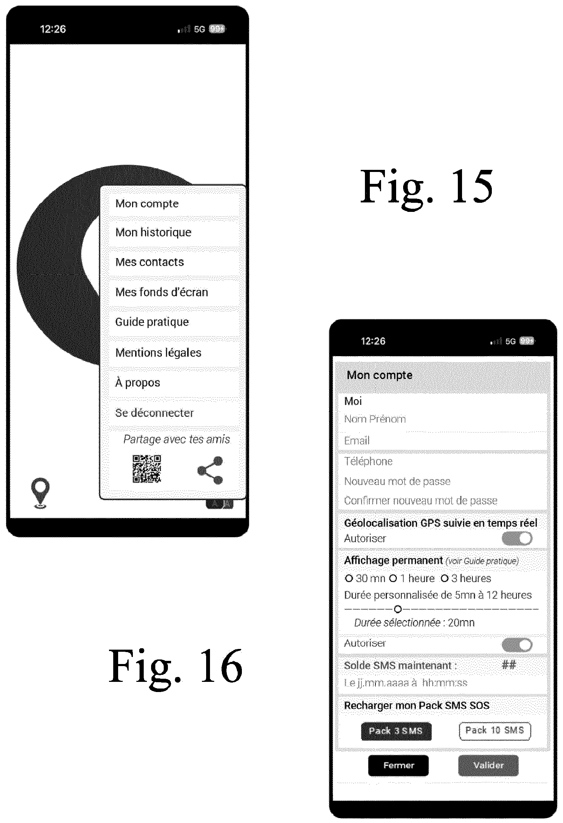

La troisième zone d'interaction se situeen bas de l'écran à droite et l'ouverture d'un menu déroulant dans une étape 204, comme cela est illustré dans la figure 15, lequel pourra être déroulé dans une étape 205et offrir notamment les fonctionnalités et accès suivants :
Mon compte : pour un accès au paramétrage du compte avec notamment l'achat et paiement de nouveaux SMS etc... Ainsi que des paramètres de réglage, tels que la géolocalisation en temps réel (oui/non), l'affichage permanent (oui/non) (figure 17) ou paramétrable de la géolocalisation préalablement autorisée *(cette fonctionnalité protège la vie privée de l'utilisateur puisque la durée d'émission de la géolocalisation est voulue et contrôlée et présente l'avantage de préserver la batterie du téléphone de l'utilisateur)* ainsi que la durée de l'écran de veille de l'application PWA active (figure 16) etc... Plus spécifiquement, le contrôle de la durée d'affichage en premier plan qui est le blocage de la mise en veille du téléphone intelligent : Par durée déterminée : par exemple30 mn 1heure 3 heures, ou par durée personnalisée: par exemple de 5 mn à 12 heures
Mon historique : pour l'historique des transactions effectuées sur ce compte ;
Mes contacts : pour la définition du contact d'urgence n°1 ou l'ajout d'autres contacts d'urgence ;
Mes fonds d'écran : pour la gestion des fichiers de type JPG pouvant servir de fonds d'écran ;
Guide pratique : un manuel de recommandations pour le meilleur usage de l'application PWA
Notice d'utilisation : un manuel exhaustif de description des fonctionnalités de l'application PWA
Mentions légales : incluant : la Politique de confidentialité - les Conditions générales d'utilisation
-À propos
Se déconnecter
Partage avec tes amis : un QR code permettant à un tiers de télécharger l'application PWA directement depuis le téléphone de l'utilisateur et un picto « Partager » permettant d'envoyer vers un quelconque destinataire, un hyperlien vers l'écran de téléchargement de l'application PWA

L'on observe que, dans un mode de réalisation particulier, l'application PWA fait le suivi constant de la localisation du téléphone de manière à pouvoir intégrer, à tout moment et en tout lieu, des coordonnées GPS précises qui pourront être introduites au sein d'un SMS que transmettra le serveur de SMS 40, sur commande du serveur d'administration 30.

Plus spécifiquement, on pourra avantageusement mettre en place une géolocalisation suivie en temps réel (« *tracking* ») qui pourra être autorisée ou non. Si non autorisée : l'Utilisateur envoie une géolocalisation fixe par SMS au ou aux contacts. Si elle est autorisée, on pourra prévoir une programmation de la durée par durée déterminée : par exemple 30 mn 1heure 3 heures. Plus spécifiquement, la géolocalisation, fixe ou tracking, est déclenchée par l'envoi du SMS et la géolocalisation tracking s'arrête à la fin de la durée programmée

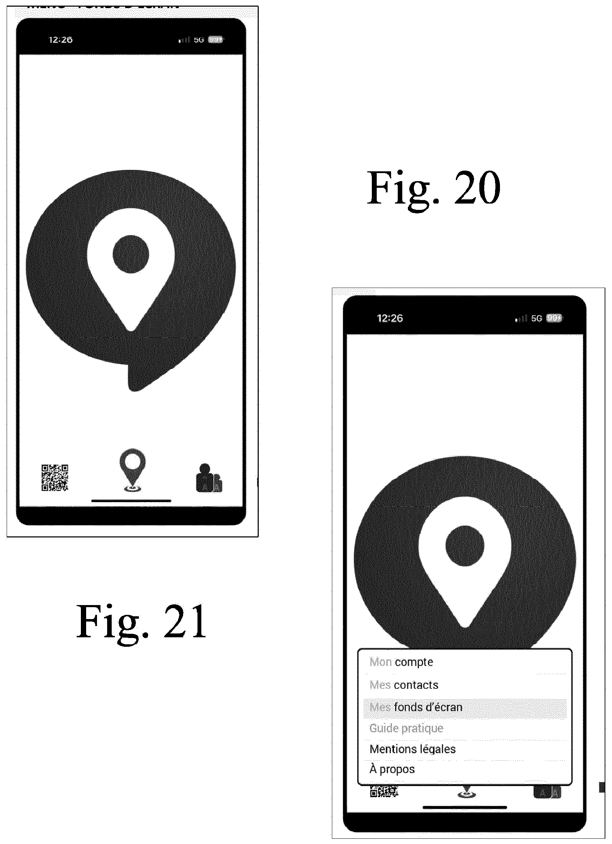

L'on décrit à présent plus en détail en relation avec la figure 19 - et les copies d'écran des figures 20 à 25 - la gestion des fonds d'écran et le procédé de génération d'un SMS suivant la présente invention.

Cette gestion des fonds d'écran démarre par une première étape 301, qui est l'activation de l'application PWA de façon à provoquer l'affichage de l'écran composite comportant un arrière-plan et, en avant-plan, un pictogramme illustré dans la figure 20 définissant la première zone d'interaction mentionnée précédemment.

Puis, dans une étape 302, en réponse à un clic de l'utilisateur sur la première zone d'interaction en bas à droite de l'affichage, le procédé appelle le menu déroulant mentionné précédemment et visible sur la figure 21.

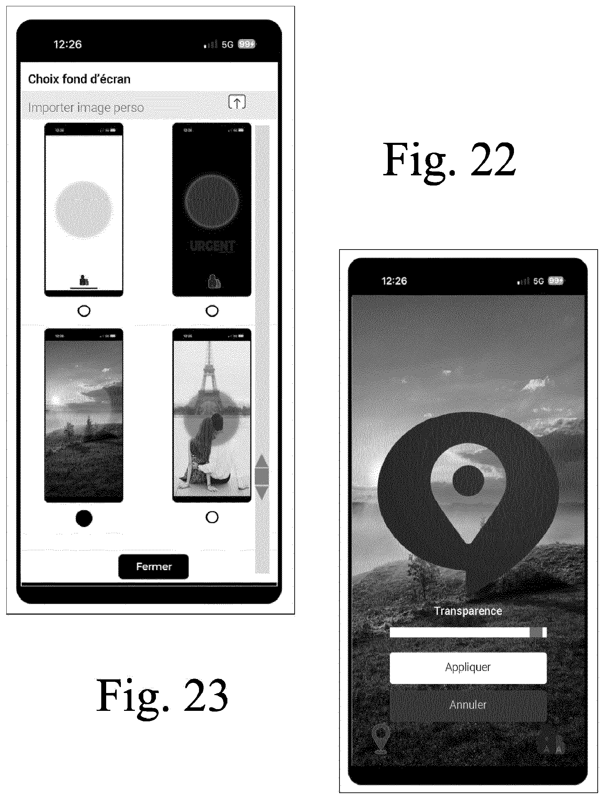

Puis, dans une étape 303, en réponse à un clic de l'utilisateur, le procédé sélectionne et lance la fonctionnalité de gestion du fond d'écran, faisant apparaître un choix d'images prédéfinies, au format quelconque parexemple jpg comme cela est illustré dans la figure 22.

Dans une étape 304, le procédé procède à la sélection d'un fichier image choisi par l'utilisateur et qui sera utilisé pour servir d'arrière-plan au sein de l'affichage composite.

Puis dans une étape 305, le procédé procède à l'affichage, en surimposition ou avant plan par rapport au fonds d'écran sélection, du pictogramme distinctif de l'application PWA et ce en association avec un affichage d'un curseur de réglage du degré de transparence sur une échelle de 0 à 100% de ce même pictogramme, comme cela est illustré en figure 23.

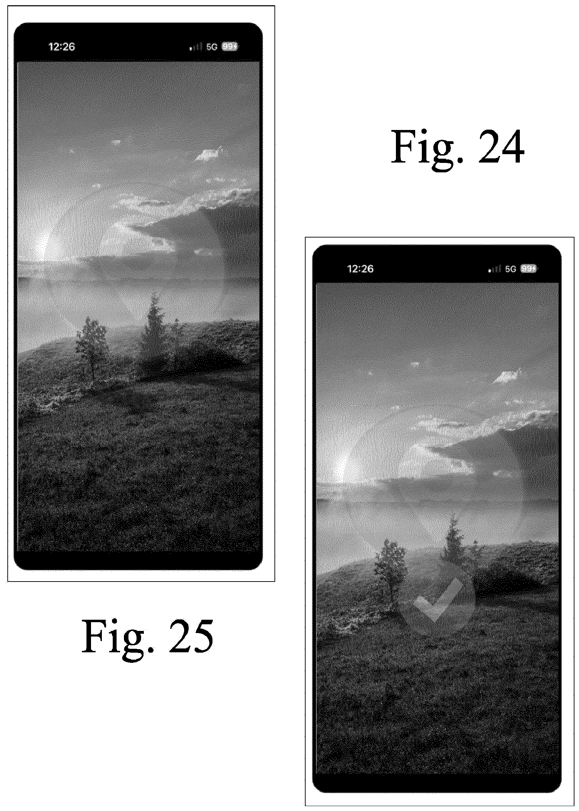

Dans une étape 306, après sélection du degré de réglage de la transparence par l'utilisateur, le procédé procède à la validation du degré de transparence, lequel vient parachever l'image composite qui servira de fonds d'écran lors de l'activation de l'application PWA selon la présente invention, comme illustré dans la figure 24.

C'est cet affichage qui caractérise le fonctionnement de l'application PWA et son écran d'accueil qui marque la disponibilité de l'application pour interagir avec l'utilisateur/trice.

Dans une étape 307, l'application PWA procède à la détection d'un double clic sur la zone d'affichage correspondant au pictogramme d'avant plan, et cette détection provoque l'affichage d'un signe de validation sur l'affichage composite, comme illustré en figure 25.

Cette action déclenche un processus au sein de la WebApp. À ce moment précis, l'application interprète l'interaction comme une demande de préparation d'une commande.

Cette commande inclut plusieurs informations essentielles :
- L'identité de l'utilisateur (nom, prénom, etc.).
- La référence d'un contact spécifique (contact n°1).
- La position GPS de l'utilisateur obtenue via les permissions du navigateur ou de l'appareil.

Dans une étape 308, l'application PWA prépare une commande à l'attention du serveur d'administration 30 avec des informations collectées précédemment.

La communication entre la WebApp (développée en *React*) et le backend (implémenté en *Laravel*) utilise une API REST sécurisée.

Dans une étape 309, le serveur d'administration qui reçoit cette commande de l'étape 308, provoque lui-même la génération et la transmission d'une commande à l'attention du serveur de SMS 40 en sorte que ce dernierprépare un SMS convenablement formaté avec les informations reçues du serveur 30 et pouvant être transmises par SMS au contact d'urgence n°1.

Plus spécifiquement, la commande préparée par le serveur 30 contient un message SMS intégrant :
- Les informations reçues de l'utilisateur (identité, référence du contact, position GPS).
- Des informations supplémentaires propres au serveur d'administration 30 (ajoutées en fonction des besoins spécifiques et qui ne sont pas parties de la présente invention).
- Le serveur d'administration 30 utilise ensuite un service d'un serveur tiers pour la finalisation de l'envoi du message SMS.

Finalement, le serveur de SMS 40 procède à la finalisation de la composition du message SMS et à son envoi au contact sélectionné par l'utilisateur.

Dans un mode de réalisation particulier, le SMS qui est préparé et transmis par le serveur de SMS 40 comporte un en-tête ou une référence à un numéro de téléphone qui correspondra parfaitement à une référence choisie par le contact n°1 de manière à éviter que le SMS transmis ne soit faussement interprété par ce dernier comme étant du SPAM etc...

Dans une étape 310, le procédé attend la détection d'un troisième clic sur la première zone d'interaction correspondant à la zone du pictogramme et, en réponse à cette détection, le procédé passe à une étape 311 dans laquelle est généré un appel vocal directement depuis le téléphone.

### COMPLEMENTS et AVANTAGES DE L'INVENTION

Le procédé qui vient d'être décrit garantit une communication fluide et sécurisée entre l'utilisateur, la WebApp, et les différents serveurs impliqués. Cette application d'assistance urgence a été conçue pour se comporter comme une application native.

### 1. Sur le plan technique :

- Gestion de zones tactiles particulières
- La gestion des évènements tactiles dans le navigateur
- Interactions avec le système d'exploitation : capteur GPS et micro
- Accès aux fonctionnalités du téléphone : micro, haut-parleur
- Performances/réactivité
- Commande tactile
- Intégration d'API externes
- affichage portrait paysage avec adaptation des commandes

### 2. Sur le plan des fonctionnalités :

- Installation de la webapp se fait en 2 clics à partir du site web public
- Le mécanisme technique d'installation sur l'écran d'accueil :
   - Par SMS n°1 contenant l'url de téléchargement :
      « Installation URGENT.a
         1. Cliquer https// (url du site de téléchargement)
         2. Puis copier/coller Clé Identification Unique dans SMS suivant »
   - Puis SMS n°2 avec la clé Unique d'Identification :
      « ####-####-####-#### »
- Commande tactile sur une zone pré-définie autour de l'icône SOS
- Séquence SOS = 2 clics pour un SMS + 1 clic pour appel GSM
- Envoi automatique d'un SMS par double-clic avec possibilité immédiate de lancer un appel vocal téléphonique vers
   le premier contact
- Envoi de SMS géré dans le navigateur vers un serveur tiers expéditeur de SMS sur le réseau GSM
- Commande d'affichage premier plan prioritaire
- Notification sur icone de la webapp pour rappel affichage en 1er plan quand activée
- Choix de fonds d'écran dans collection ou par import
- Mise en place d'un compteur d'alarmes envoyées
- Recharge du compte d'alarmes dans la webapp
- Création/Modification/Ajout/Suppression des contacts d'urgence
- Option d'achat groupé multi-utilisateurs
- L'accès à un guide pratique

### 3. Aspects techniques spécifiques qui rendent la webapp similaire à une application native

- Le mécanisme technique d'installation sur l'écran d'accueil :
   - Par SMS n°1 contenant l'url de téléchargement :
      « Installation URGENT.a
         1. Cliquer https// (url du site de téléchargement)
         2. Puis copier/coller clé Unique dans SMS suivant »
   - Puis SMS n°2 indiquant la clé Unique d'Identification à saisir :
      « ####-####-####-#### »
- La navigation :
   - Par commande tactile sur les différentes zones d'action sur l'écran d'accueil
   - Menu de navigation dans les fonctionnalités
   - Notification sur signet
   - Ajustement automatique à l'écran

On observe que l'invention qui vient d'être décrite peut être complétée et combinée avec d'autres fonctionnalités, par exemple une fonctionnalité d'accès à l'application par authentification ultra-sécurisée sans mot de passe dans le cadre d'une Webapp selon la procédure suivante :
Accès à l'écran de connexion
Saisie de l'adresse email : clic sur envoi
Affichage d'un message du type : «*Consulte ta messagerie. Un email a été envoyé à xxxxxxxx@domaine. En continuant, tu acceptes la Politique de confidentialité de URGENT Assistance^{™} (marque déposée).*

Ouverture de la messagerie et consultation de l'email :
pour avoir accès à l'application, clique sur le bouton et nous te donnons l'accès par un lien sécurisé

Le clic renvoie vers l'écran d'accueil de l'application de l'Utilisateur Identification biométrique (Touch ID et Face ID)
Affichage de l'écran d'accueil de l'application de l'Utilisateur

Cette procédure présente les caractéristiques suivantes :
- de ne pas gérer le mot de passe
- de contrôler la connexion sécurisée par reconnaissance de la clé unique d'identification
- processus de triple authentification ultra-simple et ultra-sécurisée :
   ∘ saisie email
   ∘ clic sur boution Connexion
   ∘ Touch ID ou Face ID
- Authentification via serveur plutôt que dans le téléphone à conservation de l'accès préservée

Enfin, dans certaines réalisations, il pourrait être avantageux de prévoir un écran d'accueil identique en mode Portrait ou Paysage, cette fonctionnalité découlant de la grande difficulté pour une Webapp d'obliger les téléphone/smartphones et surtout iOS à contrôler le mode Portrait. Un homme du métier pourra donc imaginer conserver le comportement naturel du smartphone selon l'orientation décidée par l'Utilisateur :
Dans une première variante, on pourrait lui garantir l'accès à la même interface en mode Paysage que Portrait actuel :
   - bouton SOS au milieu de l'écran
   - bouton Ma position en bas à gauche
   - bouton Menu en bas à droite
Dans une seconde variante, on pourrait envisager l'adaptation de l'image choisie à l'affichage Portrait et Paysage ce qui suppose une programmation de contrôle de l'image de la collection ou importée. Il convient en outre de noter que ces caractéristiques sont combinées avec la gestion des fonds d'écran et de la discrétion (transparence) que l'on a décrit précédemment.

On soulignera enfin que cette application PWA vise à "normaliser" le comportement et donc l'expérience Utilisateur UX d'une Webapp comme celui d'une application native. Son atout majeur réside bien évidement dans de la mise à jour automatique et immédiate des données, mais aussi et surtout dans la mise à disposition immédiate :
- des améliorations des fonctionnalités existantes,
- des fonctionnalités nouvelles
- et ceci, sans aucune manipulation ou intervention de l'Utilisateur

Enfin, un ultime avantage de cette application réside dans le fait que l'on peut la combiner avec un mécanisme de Token GPS^{™} basé sur une encapsulation des coordonnées de longitude et latitude au sein du pictogramme associé à l'application.

Avec les avantages suivants qui en découlent :
- anonymisation des données GPS (Longitude, Latitude) qui sont des données personnelles
- manipulation facile et intuitive
- le pictogramme devient un standard de présentation d'une géolocalisation comme un QR Code
- ce pictogramme peut être chiffré/non chiffré par l'Utilisateur
   ∘ chiffré donc non lisible par le destinataire
   ∘ non chiffré et lisible par tous
- quand chiffré ne peut être ouvert que par :
   ∘ l'Utilisateur lui-même
   ∘ par une décision judiciaire

Ce Token GPS^{™} peut être avantageusement intégrée à l'application que l'on a décrite précédemment de façon à réaliser une application présentant une importance capitale dans le domaine de protection de la vie privée, la géolocalisation, en étant une composante fondamentale et un standard de communication.

## Revendications

1. procédé de transmission d'un SMS d'assistance en urgence utilisant le réseau internet, comportant les étapes :
- installation d'une application web - de type PWA -au sein d'un téléphone intelligent (10) comportant les étapes :
- inscription d'un utilisateur ;
- définition par l'utilisateur d'un affichage composite comportant :
En arrière-plan : un fichier image prédéfini ;
En avant plan : un pictogramme de large dimension correspondant sensiblement à une première zone d'interaction avec l'utilisateur pour la détection d'un double clic ;
Dans lequel ledit pictogramme est associé à un degré de transparence réglable par l'utilisateur de manière à commander le degré de discrétion de ladite application PWA lors de son fonctionnement.

2. Procédé selon la revendication 1 **caractérisé en ce que** la détection d'un double clic de l'utilisateur sur ladite première surface génère la transmission d'une commande à l'attention d'un serveur d'administration distant (30), lequel provoque alors la génération d'un message SMS partant en toute discrétion vers un contact d'urgence prédéfini.

3. Procédé selon la revendication 1 **caractérisé en ce que** ladite commande transmise par l'application PWA audit serveur d'administration (30) comporte les éléments suivants :
- L'identité de l'utilisateur (nom, prénom, etc.).
- La référence d'un contact spécifique (contact n°1).
- La position GPS de l'utilisateur obtenue via les permissions du navigateur ou de l'appareil.

4. Procédé selon la revendication 3 **caractérisé en ce que** procédé détecte une troisième clique sur ladite première zone d'interaction et lance automatiquement un appel vocal vers un numéro prédéfini.

5. Procédé selon la revendication 4 **caractérisé en ce que** ledit appel vocal est transmis à un numéro d'urgence.

6. Procédé selon la revendication 4 **caractérisé en ce que** ledit appel vocal est transmis à un contact n°1.

7. Procédé selon l'une des revendications précédentes, **caractérisé en ce que** ladite commande transmise par l'application PWA audit serveur d'administration (30) comporte en outre des données GPS successives durant une fenêtre temporelle prédéterminée permettant au contact n°1 d'accéder au suivi des déplacements consécutifs durant ladite fenêtre temporelle.

8. Procédé selon l'une des revendications précédentes **caractérisé en ce que** ledit affichage composite comporte en outre :
Une seconde zone d'interaction de surface inférieure à ladite première zone pour l'affichage d'un écran de géolocalisation montrant la localisation dudit téléphone intelligent ;
Une troisième zone d'interaction de surface inférieure à ladite première zone pour l'affichage d'un menu déroulant permettant notamment la gestion du compte, des fonds d'écran et des contacts
Dans lequel le menu déroulant comportant une commande permettant d'associer un fichier image prédéfini à un degré de transparence défini par un curseur de manière à définir la construction de l'affichage composite.
